(19) **Europäisches Patentamt**
**European Patent Office**
**Office européen des brevets**

(11) **EP 3 839 203 A1**

(12) **EUROPEAN PATENT APPLICATION**

(43) Date of publication:
**23.06.2021 Bulletin 2021/25**

(51) Int Cl.:
***E21C 41/16*** *(2006.01)* ***E21F 13/00*** *(2006.01)*
***G05D 1/02*** *(2020.01)*

(21) Application number: **19216594.2**

(22) Date of filing: **16.12.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(71) Applicant: **Sandvik Mining and Construction Oy 33330 Tampere (FI)**

(72) Inventors:
• **MÄKELÄ, Hannu**
  **00670 Helsinki (FI)**
• **TARIQ, Usama**
  **02940 Espoo (FI)**

(74) Representative: **Sandvik**
**Sandvik Mining and Construction Oy PL 100**
**Patent Department**
**33311 Tampere (FI)**

(54) **MINE VEHICLE SAFETY CONTROL**

(57) According to an example aspect of the present invention, there is provided a method, comprising: (310) receiving a tunnel model of an underground tunnel system of a worksite, (320) receiving a route point entry indicative of a route point position for a mine vehicle in the tunnel system, (330) defining, for controlling obstacle detection for the mine vehicle, at least one lateral safety margin parameter on the basis of vehicle dimension data and processing the tunnel model in respect to the route point position, and (340) associating the at least one lateral safety margin parameter with the route point position.

Fig. 3

## Description

FIELD

The present invention relates to controlling mine vehicle operations safety, and in particular to controlling obstacle detection for mine vehicles.

BACKGROUND

Underground worksites, such as hard rock or soft rock mines, typically comprise a variety of operation areas intended to be accessed by different types of mobile work machines, herein referred to as mobile vehicles. An underground mobile vehicle may be an unmanned, e.g. remotely controlled from a control room, or a manned mobile vehicle, i.e. operated by an operator sitting in a cabin of the mobile vehicle. Mobile vehicles operating in underground work sites may be autonomously operating, i.e. at least partially automated mobile vehicles. Location tracking of mobile objects, such as mobile vehicles and persons is required at many worksites.

WO2004086084 discloses a mine vehicle collision prevention system. The mine vehicle includes at least one scanner to scan the environment in front of the vehicle. On the basis of the scanning, an obstacle-free route is determined whose outermost points in a sideward direction are stored as memory points. At least one sideward safe area has been predetermined around the vehicle. A control system checks that no memory point resides within the safe area.

A scanner applied for detecting tunnel walls typically needs to be positioned on uppermost part of the mine vehicle, e.g. on cabin roof of a loader. In many mines there are reinforcing structures at floor-wall corners. The tunnel may thus be narrower close to the floor than upper at the scanning level of the scanner. This may lead to undetected obstacles and potentially vehicle damages or unnecessary stopping of the mine vehicle, adversely affecting productivity.

SUMMARY

The invention is defined by the features of the independent claims. Some specific embodiments are defined in the dependent claims.

According to a first aspect of the present invention, there is provided an apparatus, comprising means configured for performing: receiving a tunnel model of an underground tunnel system of a worksite, receiving a route point entry indicative of a route point position for a mine vehicle in the tunnel system, defining, for controlling obstacle detection for the mine vehicle, at least one lateral safety margin parameter on the basis of vehicle dimension data and processing the tunnel model in respect to the route point position, and associating the at least one lateral safety margin parameter with the route point position.

According to a second aspect of the present invention, there is provided a method, comprising: receiving a tunnel model of an underground tunnel system of a worksite, receiving a route point entry indicative of a route point position for a mine vehicle in the tunnel system, defining, for controlling obstacle detection for the mine vehicle, at least one lateral safety margin parameter on the basis of vehicle dimension data and processing the tunnel model in respect to the route point position, and associating the at least one lateral safety margin parameter with the route point position.

According to a third aspect, there is provided an apparatus comprising at least one processing core, at least one memory including computer program code, the at least one memory and the computer program code being configured to, with the at least one processing core, cause the apparatus at least to carry out the method or an embodiment of the method.

According to a fourth aspect, there is provided a mine vehicle, comprising means configured for performing obstacle detection in an underground tunnel system by using the at least one lateral safety margin parameter defined by the method or an embodiment thereof.

According to a fifth aspect, there is provided a system, comprising means or two or more devices or units configured to perform the method or an embodiment thereof.

The means may comprise at least one processor; and at least one memory including computer program code, the at least one memory and computer program code configured to, with the at least one processor, cause the performance of the apparatus or the vehicle.

According to a sixth aspect, there is provided a computer program, a computer program product or (a non-tangible) computer-readable medium comprising computer program code for, when executed in a data processing apparatus, to cause the apparatus to perform the method or an embodiment thereof.

In an embodiment according to any of the aspects, the route point position is defined in the entry as two-dimensional horizontal plane position data comprising x coordinate value and y coordinate value.

In an embodiment according to any of the aspects, the tunnel model is a 3D tunnel model. The tunnel model may comprise 3D point cloud data generated on the basis of scanning the tunnel system.

In an embodiment according to any of the aspects, the at least one lateral safety margin parameter is stored with route point data in a route point file for controlling autonomous driving of the vehicle

In an embodiment according to any of the aspects, vertical plane position(s) for lateral distance measurement(s) for defining the safety margin parameter are limited on the basis of height information indicated of the mine vehicle. Some further example embodiments, which may be applied with any of the aspects, are illustrated in the dependent apparatus claims and in the embodiments section below.

In an embodiment according to any of the aspects, the vehicle comprises a first scanner configured to scan tunnel wall profile at a first vertical level in relation to the vehicle, wherein navigation of the vehicle is controlled on the basis of scanning data from the first scanner, an environment model generated based on scanning at the first vertical level, and route point data comprising the route point entry, wherein the tunnel model is generated by a second scanner configured to scan tunnel wall profile at a second vertical level in relation to the vehicle.

In an embodiment according to any of the aspects, a collision avoidance control function of the mine vehicle is configured to:

- monitor distances to closest detection points on the basis of scanning environment by at least one scanner (40) of the vehicle during driving,
- determine if a detection point falls in an obstacle detection zone determined on the basis of the at least one lateral safety margin parameter in response to detecting the vehicle to locate in proximity to the at least one route point, and
- apply a second safety margin parameter in response detecting the vehicle to locate in proximity to a second route point associated with the second safety margin parameter defined on the basis of processing the tunnel model in respect to the second route point.

BRIEF DESCRIPTION OF THE DRAWINGS

FIGURE 1 illustrates an example of an underground work site;

FIGURE 2 illustrates an example of an autonomous mine vehicle in accordance with some embodiments;

FIGURE 3 illustrates a method according to at least some embodiments;

FIGURE 4 illustrates a 3D model of an underground worksite;

FIGURES 5 and 6 illustrate example views of performing measurements at a tunnel model;

FIGURE 7 illustrates an apparatus capable of supporting at least some embodiments, and

FIGURE 8 illustrates an example of a system for underground worksite.

EMBODIMENTS

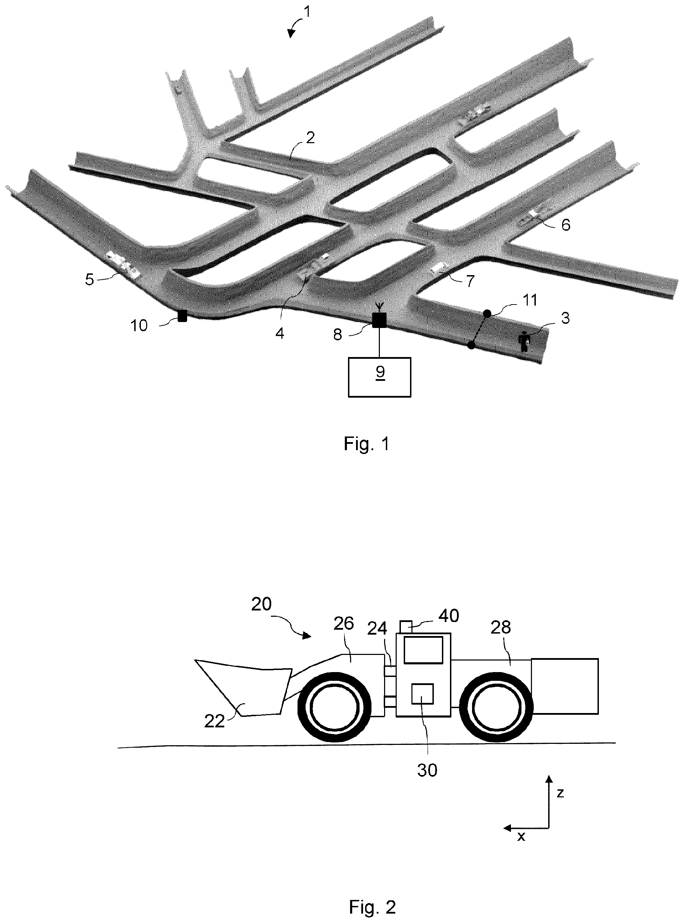

Figure 1 illustrates a simplified example of an underground mine worksite 1 comprising a network of underground tunnels 2. A plurality of mobile objects or devices, such as persons or pedestrians 3 and/or mine vehicles 4, 5, 6, 7 may be present in and move between different areas or operation zones of the worksite 1.

The term mine vehicle herein refers generally to mobile work machines suitable to be used in the operation of different kinds of mining and/or construction excavation worksites, such as lorries, dumpers, vans, mobile rock drilling or milling rigs, mobile reinforcement machines, bucket loaders or other kind of mobile work machines which may be used in different kinds of excavation worksites. Hence, the term mine vehicle is not limited in any way to vehicles only for ore mines, but the mine vehicle may be a mobile work machine used at construction excavation sites. A mine vehicle may be an autonomously operating mobile vehicle. The term autonomously operating mobile vehicle herein refers to at least partially automated mobile vehicles. The vehicle may be configured with an autonomous operating mode, during which it may operate/drive independently without requiring continuous user control, but the vehicle may be taken under external control, during states of emergencies, for example.

The worksite 1 comprises a communications system, such as a wireless access system comprising a wireless local area network (WLAN) and/or a cellular communications network, comprising a plurality of wireless access nodes 8. The access nodes 8 may communicate with wireless communications units comprised by the mine vehicles or mobile devices carried by pedestrians and with further communications devices (not shown), such as network device(s) configured to facilitate communications with a control system 9, which may be an on-site (underground or above-ground) and/or remote via intermediate networks. For example, a server of the system 9 may be configured to manage at least some operations at the worksite, such as provide a UI for an operator to remotely monitor and, when needed, control automatic operation operations of the mine vehicles and/or assign routes and work tasks for a fleet of vehicles and update and/or monitor task performance and status.

The system 9 may be connected to a further network(s) and system(s), such a worksite management system, a cloud service, an intermediate communications network, such as the internet, etc. The system may comprise or be connected to further device(s) or control unit(s), such as a handheld user unit, a vehicle unit, a worksite management device/system, a remote control and/or monitoring device/system, data analytics device/system, sensor system/device, etc.

The worksite 1 may further comprise various other types of mine operations devices 10 connectable to the control system 9 e.g. via the access node 8, not in detail illustrated in Figure 1. Examples of such further mine operations devices 10 include various devices for power supply, ventilation, air condition analysis, safety, communications, and other automation devices. For example, the worksite may comprise a passage control system comprising passage control units (PCU) 11 separating operation zones, some of which may be set-up for autonomously operating mine vehicles. The passage control system and associated PCUs may be configured to allow or prevent movement of one or more mine vehicles and/or pedestrians between zones.

Figure 2 illustrates a mine vehicle 20, in this example a loader or a load and haul (LHD) vehicle comprising a bucket 22. The mine vehicle 20 may be an articulated vehicle comprising a front section 26 and a rear section 28 connected by a joint 24. However, it will be appreciated that application of the presently disclosed features for obstacle detection is not limited to any particular type of mine vehicle.

The mine vehicle 20 comprises at least one control unit 30 configured to control at least some functions and/or actuators of the mine vehicle. The control unit 30 may comprise one or more computing units/processors executing computer program code stored in memory. The control unit may be connected to one or more other control units of a control system of the mine vehicle, in some embodiments by a controller area network (CAN) bus. The control unit may comprise or be connected to a user interface with a display device as well as operator input interface for receiving operator commands and information to the control unit.

In some embodiments, the control unit 30 is configured to control at least autonomous operation control related operations, and there may be one or more other control units in the mine vehicle for controlling other operations. It is to be appreciated that the control unit 30 may be configured to perform at least some of the below illustrated features, or a plurality of control units or controllers may be applied to perform these features. There may be further operations modules or functions performed by the control unit(s), e.g. an automatic driving function, at least one positioning unit/module/function, and/or an obstacle detection function.

The mine vehicle 20 may be unmanned. Thus, the user interface may be remote from the vehicle and the vehicle may be remotely controlled by an operator in the tunnel, or in control room at the mine area or even long distance away from the mine via communications network(s). A control unit outside the mine vehicle 20, for example in the control system 9 may be configured to perform at least some of the below illustrated features.

The mine vehicle 20 comprises one or more scanning units, or scanners 40, configured to perform scanning of the environment of the mine vehicle. In some embodiments, the scanner 40 may be a 2D or flatbed scanner configured to emit one or more beams at a selected height. The beam(s) may be directional or omnidirectional. The scanner may be laser scanner or another type of sensor device appropriate for determining obstacles and distances to obstacles.

A positioning function performed e.g. by the control unit 30 may be configured to compare operational scanned tunnel profile data to reference profile data stored in an environment model and position the mine vehicle on the basis of finding a match in the environment model to position the mine vehicle and/or correct positioning by dead-reckoning.

A driving plan, or a route plan, may define a route to be driven by the mine vehicle 20 and may be used as an input for automatic driving of the mine vehicle. The route plan may be generated offline and off-site, for example in an office, or on-board the mine vehicle e.g. by a teaching drive. The plan may define a start point, an end point, and a set of route points for the automatic drive. Such plan may be sent via a wired or wireless connection to, or otherwise loaded to the mine vehicle, to a memory of the mine vehicle for access by the control unit 30 or another unit controlling automatic driving of the mine vehicle and generating steering parameters or signals to follow the route according to the route plan.

The mine vehicle 20 may be provided with an obstacle detection function or unit, which may be part of a collision avoidance or prevention system and performed by the control unit 30, for example. The obstacle detection function may be configured to perform collision examination based on scanning data received from at least scanner 40. There may a plurality of scanners applied. For example, one scanner may cover a rear portion of the vehicle and another scanner may cover a front section of the vehicle by directional beams. The obstacle detection may apply one or more obstacle detection or safety areas around the vehicle. If an object is detected as an obstacle in the area, the mine vehicle may be stopped. Such safety zone may be e.g. 30 cm on sides of the vehicle and 100 cm at the rear and front of the vehicle.

The scanner 40 often needs to be positioned on uppermost part of the mine vehicle, e.g. on cabin roof of a loader to avoid damages and to obtain wide scanning coverage. In many mines there are reinforcing structures or other obstacles at floor-wall corners, or the width of the tunnel is otherwise narrower close to the floor. Particularly in case of 2D scanners, such lower-part obstacles may be left undetected. If an obstacle detection zone is determined based on such scanner e.g. during a manual drive in the tunnel system, the obstacle detection zone may remain too wide, which may cause unnecessary stopping of the mine vehicle due to such lower part structures, adversely affecting production efficiency. If the obstacle detection zone is configured for the obstacle detection for the route based on the narrowest part of the tunnel system, it may be possible that relevant obstacles are left unnoticed at wider parts of the tunnel system where the autonomous mine vehicle may be driving at high speed (or the vehicle may be controlled to drive slower than it could). On the other hand, if the collision detection system would be configured to ignore obstacles in certain area e.g. with the reinforcing structures, this poses a collision risk. There are now provided further improvements for mine vehicle obstacle detection operations, further illustrated below.

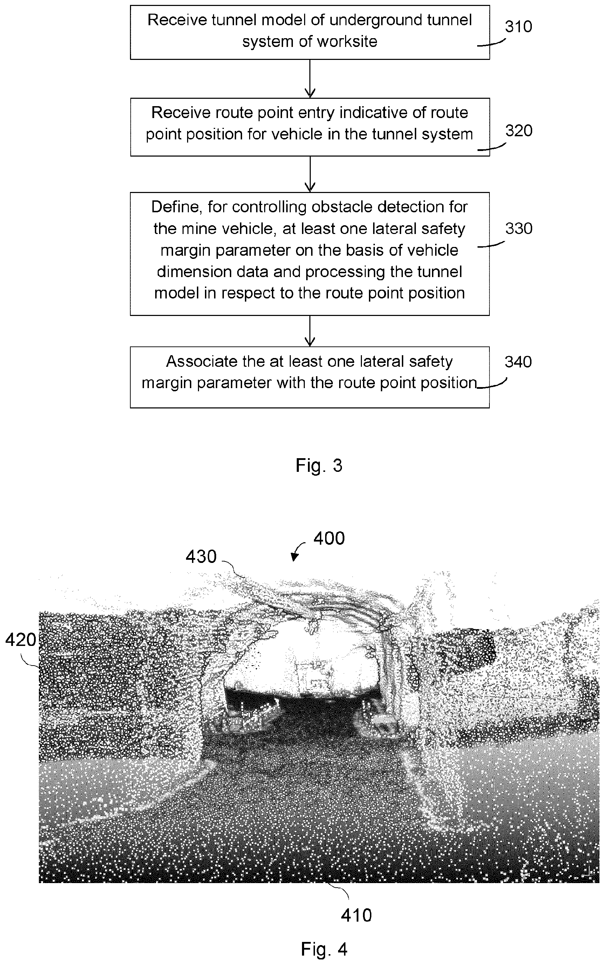

Figure 3 illustrates a method for generating control information applicable as an input for controlling obstacle detection operations for a vehicle travelling a route at an underground worksite. The method may be implemented by an apparatus configured for at least generating such control information, such as a server, a workstation for worksite operator, designer, or controller, a mobile computing unit, a vehicle on-board control device, or other kind of appropriately configured data processing device. The apparatus may be configured to perform route data generation or update function and/or a model processing algorithm which may carry out a model processing procedure.

The method comprises receiving 310 a tunnel model of an underground tunnel system of a worksite, such as the worksite 1. The tunnel model may be a 3D model, such as a 3D point cloud model generated based on scanning the tunnel system by a 3D scanner. A route point entry indicative of a route point position for a vehicle, such as the mine vehicle 20, in the tunnel system is received 320. The route point entry and position may define 2D position of the route point, in some embodiments x and y coordinates in Cartesian coordinate system. Typically the route point is, but does not need to be, in the middle between the walls of the tunnel. However, there may be vertical direction information directly or indirectly associated with the route point, e.g. a vertical level indication in case of overlapping tunnels at a tunnel ramp.

Block 330 comprises defining, for controlling obstacle detection for the vehicle, at least one lateral safety margin parameter on the basis of vehicle dimension data and processing the tunnel model in respect to the route point position. At least one computational distance measurement may thus be performed in the tunnel model at a vertical plane position differing from the vertical plane position of the scanner 40, to define distance between the vehicle (at the route point being assessed) and obstacle(s) on a side of the vehicle. The lateral safety parameter may then be defined dependent on the distance measurement(s).

The at least one lateral safety margin parameter is associated 340 with the route point position. Thus, the safety margin parameter may be stored in the route point entry, stored in another entry of route point data or route data to apply at least for the route point, or otherwise bound to the route point position or configured for an application or unit applying the route point data. The lateral safety margin parameter(s) may thus be stored in or for route point data in a route file for controlling autonomous driving of the vehicle. It is to be appreciated that the present functionality may be applied for route data and obstacle detection function for vehicles and operating situations involving an operator, for example remotely monitoring or controlling the mine vehicle.

The vehicle dimension data may refer generally to data indicative of at least sideward space required by the vehicle. Such vehicle dimension data may be specific to the vehicle or a set of vehicles (such as vehicles of predefined type(s) or model(s)). The vehicle dimension data may be preconfigured for the vehicle or retrieved from a memory on the basis of an identifier of the vehicle for which the supplementary route point data is being generated.

The lateral safety margin refers generally to a safety margin to be applied sideward in respect to (propagation of) the vehicle for collision detection. The safety margin may define a safety or obstacle detection zone to be applied at least between a wall and a side of the vehicle for collision avoidance. The lateral safety margin parameter may define the margin or affect the margin. In an example embodiment, the lateral safety margin parameter defines the width of the safety margin or zone applied in respect of a side of the vehicle.

A vehicle, such as the mine vehicle 20, may comprise obstacle detection function configured to use the lateral safety parameter defined in block 330 and associated with the route point. The vehicle may itself perform the method of Figure 3 or receive the safety parameter from another device with route point data. If an obstacle is detected within the safety margin or associated zone, a collision warning may be issued, and the vehicle may be instantly stopped. The method may be repeated for some or all route points in a route point file or description. The method may be applied as part of or after route generation, e.g. by a teaching drive or computationally. Sizes of locally applicable obstacle detection or safety zone may thus be determined and saved in or for respective route point entries. It is to be appreciated that the tunnel model may be processed directly or indirectly in respect to the route point position. For example, a further lateral position, in some embodiments outermost point at side of the vehicle, may be determined based on the route point position and the vehicle dimension data. The tunnel model may be processed to determine distances between the further lateral position(s) to tunnel model points. The tunnel model may be processed for both sides of the vehicle in respect to the route point position, and the safety margin may be defined based on the shortest distance among the measurements. A single safety margin may be defined to be applied on both sides, or a side-specific safety margin may be defined and stored for the obstacle detection.

The safety margin parameter may be defined 330 for two or more route point positions and/or associated 340 with two or more route point positions. For example, the tunnel model may be processed in respect to a set of two or more route point positions. A safety margin parameter may be defined for the set of route points, e.g. based on shortest distance measured at the different route point positions. The safety margin parameter may then be associated with the set of route point positions, e.g. by including the safety margin parameter at entries of each route point of the set. In an embodiment, the safety margin (parameter) is specific to a route segment comprising a plurality of route points. Thus, the safety margin parameter may be defined in route segment data (and thus associated with the route point positions included or referred to in the route segment). When the vehicle enters a new route segment, obstacle detection function is configured to begin to apply safety margin parameter associated with the new route segment.

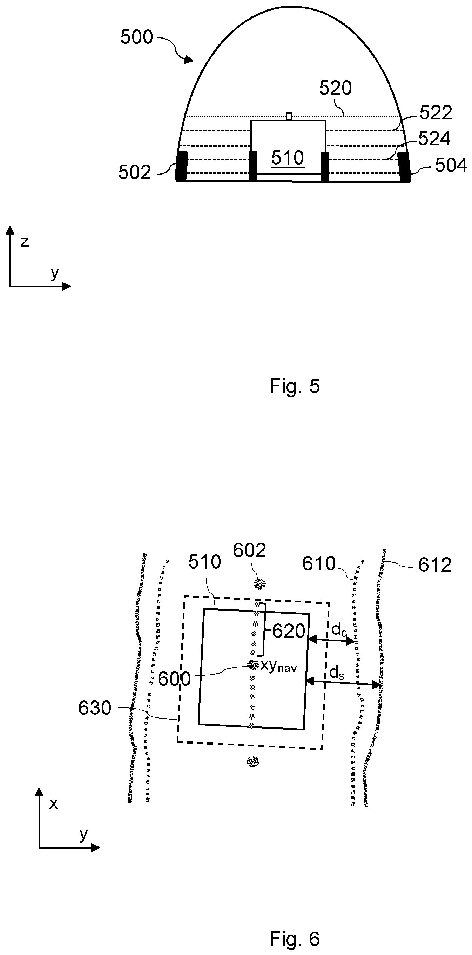

Block 330 may comprise, or be preceded with, performing a set of lateral distance measurements in the tunnel model on the basis of the route point position, each lateral distance measurement being performed at different vertical plane position. The lateral safety margin parameter(s) may be selected on the basis of shortest distance among the distance measurements. The more measurements are carried out at different vertical plane positions, the better certainty can be obtained on selecting a proper safety margin based on narrowest level (and considering various obstacles). The term lateral distance measurement may refer to distance computationally measured sideways, which may be a distance essentially in lateral plane (or substantially in y direction), to enable measuring distance from a side of the vehicle to a wall point (or another obstacle) indicated in the tunnel model. It is to be noted that the lateral safety margin and/or the lateral distance does not have to be defined or measured perpendicularly from a side of the vehicle to the wall. Reference is also made to z-y intersection example view of Figure 5, in which lines 522 to 524 illustrate lateral distance measurements, in y direction, at different vertical positions (at different z coordinates or levels).

The present features enable substantial advantages for obstacle detection and autonomous vehicle collision avoidance functions. Obstacle (inclusive of wall edge) detection may now be controlled based on adaptive safety margin, adapted based on processing the tunnel model at the route point at different heights or z coordinates in relation to the mine vehicle 20. Particular advantages are available in case of 2D or flatbead scanners, wherein wall borders or other obstacles outside the scanner beam level, may be detected and particularly at lower portions. Also in case of 3D scanners, wall borders or other obstacles in areas hidden e.g. by a vehicle structure, such as boom or bucket, may now be detected and safety margin for obstacle detection automatically adapted accordingly.

It will be appreciated that Figure 3 illustrates some embodiments related to adapting safety margin for a route point based on further processing of a tunnel model. As an example variation, route point entry may be received before receiving (and possibly requesting) the tunnel model, or they both may be received essentially simultaneously. Various different options for further implementation exist, and additions and amendments may be applied to the method, some further options and embodiments being illustrated below, with references to the mine vehicle 20.

A 3D model of the underground tunnel system may be applied as the tunnel model. Figure 4 illustrates an example of a 3D model 400 of an underground worksite portion and tunnel thereof, illustrating floor 410, walls 420, and roof 430 of the tunnel. The 3D tunnel model may comprise or be formed based on point cloud data generated on the basis of the scanning. In some other embodiments, the 3D model may be stored in some other format, such as a mesh model comprising vertices, edges and faces. In some embodiments, the 3D tunnel model may be a design model or may be generated on the basis of a design model, such as a CAD model, created by a mine designing software or a 3D model created on the basis of tunnel lines and profiles designed in a drill and blast design software. Thus, same analysis or processing can be done on measured or initial planned model of the tunnel environment. The 3D model may be stored in a database accessible by one or more modules of a computing apparatus, such as a route generation module, obstacle detection module, and/or a positioning service module.

Figure 5 illustrates a simplified example z and y direction perspective view of a tunnel model 500 modelling a tunnel profile, indicative of protrusions 502, 504 in lower parts of the tunnel, such as concrete reinforcement structures.

In some embodiments, the mine vehicle dimension data comprises or is indicative of a 2D or 3D model of the mine vehicle. The model of the mine vehicle may model outer dimensions of all or at least one portion of the mine vehicle, such as side(s). The mine vehicle may be modelled at the route point being assessed at or for the safety parameter definition 330. Thus, the mine vehicle model 510 may be positioned in the tunnel model 500 at/in relation to the route point position. The safety margin parameter may be defined on the basis of one or more vehicle model side positions. The method of Figure 3 may thus comprise:

- receiving a model of the vehicle in the tunnel model,

- positioning the vehicle model in the tunnel model on the basis of the route point position, and

- defining the at least one lateral safety margin parameter on the basis of distances in respect to the vehicle model and obstacle points in the tunnel model.

For example, a set of measurements, illustrated i.a. by lines 522 and 524 are performed to determine lateral distances between obstacles in the tunnel model 300 and mine vehicle model 510 (and in particular the vehicle model points representative of a side of the mine vehicle 20). However, it is to be appreciated that the safety parameter may be defined without model positioning, by applying at least width information associated with the vehicle indicative of real width of the vehicle and/or (sideward) space required by the vehicle.

A measurement 520 at scanner level is also illustrated in Figure 5 (which naturally does not need to be performed at block 330), on the basis of which it can be seen that the safety margin determined solely based on the scanner measurement 520 may lead to too wide obstacle detection zones. By setting the safety margin further on the basis of reinforcements 502, 504 detected based on the specific further measurements 522, 524 based on processing the tunnel model, it becomes possible to avoid or at least reduce problems of having too narrow or wide safety margin in view of the prevailing available space around the vehicle detected based on processing the tunnel model.

Route direction indicated in the route point entry may be applied as an input for processing the tunnel model at block 330. In an embodiment, the vehicle model 510 may be oriented on the basis of route direction indicated in the route point entry. Thus, the mine vehicle may be oriented at least in y direction in accordance with heading information defined for the mine vehicle at the route point in the route data. This further enables to improve appropriate modelling to define adequate safety margin at various tunnel points.

Figure 6 illustrates an example x, y direction, top-perspective view, wherein line 612 illustrates wall profile at scanner level (e.g. at z direction level illustrated by 520 in Figure 5). Line 610 illustrates profile of closest wall points, with shortest lateral distances, which may be determined based on the tunnel model processing in block 330, e.g. by measurements 522, 524 illustrated in Figure 5.

In some embodiments, distance measurements are performed at or for block 330 at multiple further points in proximity of the route point. With reference to view of Figure 6, a set 620 of intermediary points may be defined between the route point 600 (at position $xy_{nav}$), and at least one neighbouring route point 602. The intermediary points may have at least different x coordinates and/or y coordinates. The intermediary points may be computed based on coordinates of the subsequent route points and positioned at preconfigured distance from each other, e.g. every 10 cm.

The tunnel model may be processed in or before block 330 to determine distances to objects in the tunnel model at each of the intermediary points at different vertical plane positions. The lateral safety margin parameter(s) may be defined further on the basis of shortest distances at the intermediary points.

Figure 6 illustrates also the mine vehicle model 510, but it is to be appreciated that definition of the safety margin based on additional intermediary points may be applied also in other types of embodiments. Although Figure 6 illustrates intermediary points at a line between the consecutive route points, it is also to be appreciated that the intermediary points may be positioned at one or both sides of the mine vehicle model 510 or computed position of the side of the mine vehicle 20. Figure 6 illustrates also an example of a safety or obstacle detection zone 630 defined at least on sides on the basis of the safety margin parameter.

The at least one lateral safety margin parameter may be indicative of at least a width of a safety or obstacle detection zone 630 between the mine vehicle and a tunnel wall to be applied for collision detection at least at the route point.

For example, also with reference to Figure 6, the width of the obstacle detection zone 630 for collision detection may be determined based on:

- difference between a clearance distance $d_c$ indicative of the shortest lateral distance between a side of the vehicle and a tunnel model point and a scanner level distance ds indicative of lateral distance between the side of the vehicle and a tunnel model point at vertical position of the scanner, and
- a deviation distance $d_d$ indicative of allowed deviation of the vehicle from the route point.

The width of the object detection at each route point $xy_{nav}$ may thus be calculated based on determining the distance $d_s$ to the wall when the vehicle would be at $xy_{nav}$. Then, knowing the clearance $d_c$ and assuming that the vehicle is allowed to deviate for example the distance of $d_d$ from the route, the width of the obstacle detection zone at scanner height would be:

$$max(0,\ d_s - d_c + d_d)$$

Here the width of the obstacle detection zone $d_d$ may vary dynamically to optimize the free space around the vehicle:

$$d_d = max(D_{min},\ k^* \ d_c)$$

$D_{min}$ defines the minimum required clearance. $k$ defines which portion of the free space is allocated for the zone where the vehicle may drive without obstacle detection. For example, $k$ could be 0.5. Then if we have for example set $D_{min}$ e.g. to 0.2 m, $d_d$ would be 0.5 m. If the clearance $d_c$ would be e.g. only 0.35 m, then $d_d$ would be set according to $D_{min}$ which would then produce 0.2 m for the maximum deviation from the route. This is an example of safety margin parameter generation configuration facilitating to have larger obstacle detection zone in wider tunnels and smaller obstacle detection zone in narrow parts of tunnels.

The lateral safety margin parameter(s) may be defined 330 based on smallest lateral distance between the measured tunnel model point and a respective edge point of the mine vehicle detected among the set of lateral distance measurements. A tunnel wall profile may be defined at a set of vertical plane positions defined on the basis of height information of the mine vehicle. In another embodiment, a tunnel profile may be defined within a preconfigured height area from a floor level detected on the basis of processing the tunnel model at the route point position. In some embodiments, vertical plane position for lateral distance measurement is limited on the basis of height information indicated of the mine vehicle. For example, measurements above level 522 are not performed.

The lateral distance measurement(s) may thus be performed (based on the route point position) at at least one vertical plane position selected on the basis of/dependent on horizontal dimensions of the mine vehicle. This enables to reduce tunnel model processing time and resources, since the lateral distance measurement may be performed only at horizontal coverage area of the mine vehicle.

In an example embodiment, floor level in the 3D tunnel model at the two-dimensional route point position may be determined. At least one vertical plane position, such as a lowest measurement level, for the lateral distance measurements is defined on the basis of the detected floor level.

Vertical plane position(s) for distance measurement(s) may be selected on the basis of width information or profile of the mine vehicle. Thus, measurement(s) may be performed at vertical plane position or height where the machine is the widest.

The method may comprise, in or for block 330, performing casting a set of rays from the different vertical plane positions. A ray cast operation refers generally to a computational ray-surface intersection test. The set of rays may thus comprise wall detection rays. The wall detection rays may be cast on both sides of the vehicle model to detect (shortest) distances to walls on both sides of the reviewed route (or intermediary) point. The vehicle model may be centered between the walls at a tunnel location on the basis of processing the determined distances.

For example, as illustrated in Figure 5, there may be a set of rays 522, 524 cast in both y plane directions at different z positions. The number of and distance between the rays should be configured to provide adequately reliable detection of tunnel wall profile variations and other objects. The distance between rays may be selected in the range of 1-100 cm, such as 10 cm. It is to be noted that the planes may be adjusted in accordance with the applied coordinate system, for example in relation to the mobile device or worksite.

A distance to a wall may be determined in block 330 on the basis of measuring distance to a ray intersection point, i.e. a point in which the ray hits a 3D face of the tunnel. The ray cast results in intersections, which may be x, y, and z coordinates in 3D space, on the basis of which the respective distances may be determined.

In some embodiments, the 3D input model comprises 3D point cloud data generated on the basis of scanning the tunnel. In block 330, a distance to tunnel wall (or another obstacle) at a ray cast direction may be determined on the basis of a set of closest/neighbouring points. Simulating the intersection point may be performed by measuring distances to neighbouring points at different points of a ray (i.e. at difference ray distances), e.g. every 10 cm. A threshold distance for registering a hit can be may be configured on the basis of density of the point cloud model. A hit, and thus an intersection point, may be registered at a ray point/distance when at least one point (multiple may be required) is closer than the threshold distance. For example, if the point cloud has 2 cm of maximum point density, 10 cm threshold distance has been detected to provide good results.

In some embodiments only a subset of the points of the tunnel model is received 310 and/or applied as an input data set for block 330. Hence, there may be an additional pre-processing or filtering step before block 330. For example, it may be adequate to use reduced resolution or amount of points, in which case the subset according to the adequate resolution may be uniformly selected for block 330, e.g. only a predetermined portion of the points of the 3D model are selected.

In another example embodiment, the model processing algorithm may be configured to detect and exclude certain portions of the 3D tunnel model that are irrelevant for block blocks 330, for example on the basis of already reviewed route points.

Obstacle (and wall edge) detection may thus be performed by processing the tunnel model at the route point at different heights or z coordinates in relation to the mine vehicle 20. Information on obstacles detected based on the processing of the tunnel model may be associated with the route point for controlling collision avoidance. In an embodiment, information on obstacles is included in a (2D or 3D) map or profile applied for collision avoidance by the mine vehicle 20. Storage of the obstacle information enables an obstacle avoidance function to control steering the mine vehicle to avoid hitting or passing too close to the obstacle.

The route point data comprising the dynamically adaptable safety margin enabled by the route point specific safety margin parameter based on the tunnel model may be applied for controlling routing or navigating a mobile vehicle 4, 20 and particularly for obstacle detection and collision detection therefor. For example, the route point data may be thus stored in a database accessible by an obstacle detection/collision avoidance unit and/or application of a worksite server (which may be part of a positioning unit or another control unit) or a mine vehicle to be used for obstacle detection and navigating a mine vehicle along the determined route between a start point and an end point in the tunnel system.

A collision avoidance control function in or for the mine vehicle 20 may be configured to monitor distances to closest detection points (wall or other obstacle points) on the basis of scanning environment by at least one scanner 40 of the mine vehicle during driving, as also illustrated earlier. An obstacle detection zone, determined on the basis of the at least one lateral safety margin parameter in response to detecting the mine vehicle to locate in proximity to the at least one route point, may be applied for object detection. If a detection point falls in the obstacle detection zone, a collision warning may be issued, and the mine vehicle may be instantly stopped.

When the mine vehicle 20 proceeds further and is detected to be in an area of or proximity to a second route point 602, the obstacle detection function may retrieve and/or use a second safety margin parameter (defined on the basis of processing the tunnel model at the second route point and) associated with the second route point 602 from the associated route point data. The obstacle detection function may then be (re)configured to apply the second safety margin parameter during the time the mine vehicle is positioned in the area of or proximity to the second route point. It is to be noted that a safety margin parameter defined in block 330 may be applied for multiple route points.

In some embodiments, other control information is generated and associated with the route point on the basis of processing the tunnel model for controlling autonomous driving of the vehicle. For example, driving speed at the route point may be reduced in response to detecting the shortest distance from a side to an obstacle to fall under a threshold parameter.

In an example embodiment, the mine vehicle comprises a first scanner, e.g. the scanner 40, configured to scan tunnel wall profile at a first vertical level (e.g. as illustrated by line 520 in Figure 5) in relation to the mine vehicle. Navigation of the mine vehicle may thus be controlled on the basis of scanning data from the first scanner, an environment model generated based on scanning at the first vertical level, and route point data comprising the route point entry. The tunnel model may also be generated by the same first scanner (or at least at the same level to enable positioning or position correction based on detected tunnel wall profile). A second scanner may be configured to scan tunnel wall profile at a second vertical level in relation to the mine vehicle, e.g. at level 524. This may suffice when the tunnel is (with high likelihood) substantially uniformly narrowest at the second vertical level, e.g. in case of consistent concrete support structure.

In some embodiments, at least one 3D scanner is applied in the mine vehicle 20, in which case 3D scanning data or point cloud data is produced, enabling to determine distances between the mine vehicle and the wall at different z coordinate positions and applied for positioning the mine vehicle. Point cloud data generated on the basis of scanning may be applied for positioning the mine vehicle at the worksite and also for the obstacle detection and collision avoidance.

The mine vehicle 20 or the control unit 30 thereof may execute a point cloud matching functionality for matching operational (scanned) point cloud data (being scanned by the scanner(s) 40) to environment model point cloud data, i.e. reference point cloud data. Position and direction of the scanning device and/or another interest point of the vehicle, such as the (leading edge of the) bucket 22, may be determined in the mine coordinate system on the basis of the detected matches between the operational point cloud data and the reference cloud data.

The control system 9 may comprise a server, which may comprise one or more above or underground computing units. The server may comprise a route data generation module configured to perform the method of Figure 3 and provide the route point data as an input to further devices, in some embodiments to the control unit 30 of the mine vehicle 20.

The server may comprise various further module(s), such as a remote monitoring process and UI, and/or a cloud dispatcher component configured to provide selected worksite information, such as the route point data to a cloud service. The system and server may be connected to a further system and/or network, such a worksite management system, a cloud service, an intermediate communications network, such as the internet, etc. The system may further comprise or be connected to a further device or control unit, such as a handheld user unit, a vehicle unit, a worksite management device/system, a remote control and/or monitoring device/system, data analytics device/system, sensor system/device, etc.

An electronic device comprising electronic circuitries may be an apparatus for realizing at least some embodiments of the present invention, such as the main operations illustrated in connection with Figure 3. The apparatus may be comprised in at least one computing device connected to or integrated into a control system which may be part of a worksite control or automation system or a vehicle. The apparatus may be a distributed system comprising a set of at least two connectable computing devices. At least one of the features illustrated in connection with Figure 3 (and/or embodiments thereof) may be performed in a first device and other feature(s) may be performed in a second device, which are connected via a wireless and/or wired connection. At least some of the features may be performed in a server or other type of control unit available for an operator remotely controlling the vehicle and/or generating the route point data for the vehicle. For example, the tunnel model processing may be performed in a first device, such as the server, and the safety margin parameter definition and/or the association of the safety margin parameter may be performed in a second device, such as the vehicle.

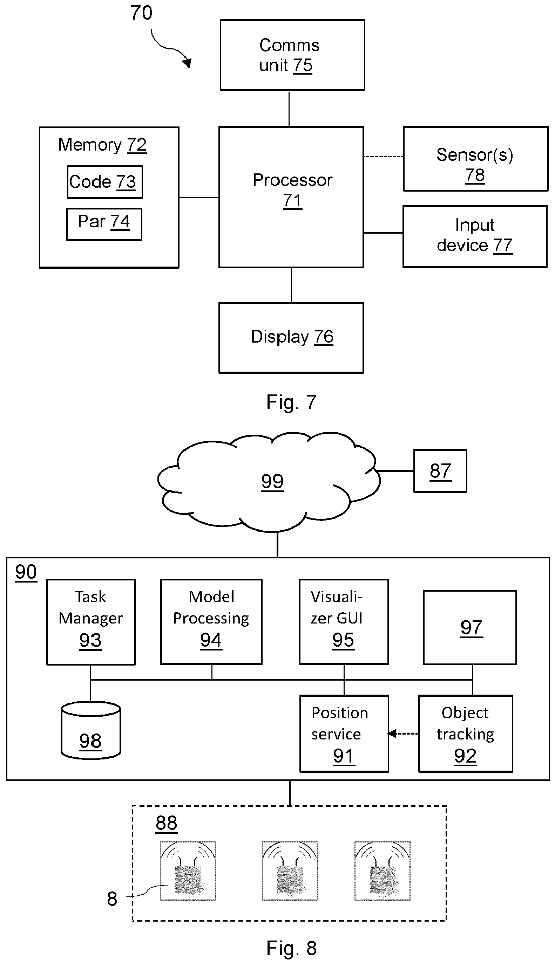

Figure 7 illustrates an example apparatus capable of supporting at least some embodiments of the present invention. Illustrated is a device 70, which may be configured to carry out at least some of the above illustrated embodiments relating to the route point safety margin definition and/or usage thereof. In some embodiments, the device 70 comprises or implements a control unit 30 of a mine vehicle 20 and/or a computing device outside the mine vehicle configured to at least perform the method of Figure 3.

Comprised in the device 70 is a processor 71, which may comprise, for example, a single- or multi-core processor. The processor 71 may comprise more than one processor. The processor may comprise at least one application-specific integrated circuit, ASIC. The processor may comprise at least one field-programmable gate array, FPGA. The processor may be configured, at least in part by computer instructions, to perform actions.

The device 70 may comprise memory 72. The memory may comprise random-access memory and/or permanent memory. The memory may be at least in part accessible to the processor 71. The memory may be at least in part comprised in the processor 71. The memory may be at least in part external to the device 70 but accessible to the device. The memory 72 may be means for storing information, such as parameters 74 affecting operations of the device. The parameter information in particular may comprise parameter information affecting e.g. the safety margin definition, such as threshold values.

The memory 72 may comprise computer program code 73 including computer instructions that the processor 71 is configured to execute. When computer instructions configured to cause the processor to perform certain actions are stored in the memory, and the device in overall is configured to run under the direction of the processor using computer instructions from the memory, the processor and/or its at least one processing core may be considered to be configured to perform said certain actions. The processor may, together with the memory and computer program code, form means for performing at least some of the above-illustrated method blocks in the device.

The device 70 may comprise a communications unit 75 comprising a transmitter and/or a receiver. The transmitter and the receiver may be configured to transmit and receive, respectively, information in accordance with at least one cellular or non-cellular standard. The transmitter and/or receiver may be configured to operate in accordance with global system for mobile communication, GSM, wideband code division multiple access, WCDMA, long term evolution, LTE, 3GPP new radio access technology (N-RAT), wireless local area network, WLAN, and/or Ethernet, for example.

The device 70 may comprise or be connected to a UI. The UI may comprise at least one of a display 76, a speaker, an input device 77 such as a keyboard, a joystick, a touchscreen, and/or a microphone. The UI may be configured to display views on the basis of the worksite model(s) and the mobile object position indicators. A user may operate the device and control at least some aspects of the presently disclosed features, such as the tunnel model visualization. In some embodiments, the user may control a vehicle 4-7 and/or the server via the UI, for example to change operation mode, change display views, modify parameters 74 in response to user authentication and adequate rights associated with the user, etc.

The device 70 may further comprise and/or be connected to further units, devices and systems, such as one or more sensor devices 78, such as the scanner(s) 40 or other sensor devices sensing environment of the device 70 or properties of the mine vehicle, such wheel rotation or orientation changes.

The processor 71, the memory 72, the communications unit 75 and the UI may be interconnected by electrical leads internal to the device 70 in a multitude of different ways. For example, each of the aforementioned devices may be separately connected to a master bus internal to the device, to allow for the devices to exchange information. However, as the skilled person will appreciate, this is only one example and depending on the embodiment various ways of interconnecting at least two of the aforementioned devices may be selected without departing from the scope of the present invention.

Figure 8 illustrates an example of a system for underground worksite. The system comprises a wireless access network 88 comprising a plurality of access nodes 8 for wireless communication with communication devices of mobile objects 3-7 in the tunnels. The system comprises a server 90, which may comprise one or more aboveground or underground computing units. The server 90 is configured to perform at least some of the above illustrated features related relating to the route point safety margin definition and/or usage thereof, such as at least some of features of the method of Figure 3.

Figure 8 further illustrates operational modules 91-97 of the server 90 according to some embodiments. An object tracking module 92 may be provided to track position information of mobile objects in the tunnel system 1 and provide the position information to one or more of the other modules, in some embodiments a position service module 91. The position service 91 is configured to provide, upon request or by push transmission, mobile object position information obtained from or generated on the basis of information from the object tracking 92 for relevant other modules or functions, such as the database 98, the visualizer GUI 95, and/or remote units or systems 87 via one or more networks 99. The object tracking 92 may be implemented as part of another module, such as the position service module 91.

The server 90 may comprise a task manager or management module 93, which is configured to manage at least some operations at the worksite. For example, the task manager may be configured to assign work tasks for a fleet of vehicles and update and/or monitor task performance and status, which is indicated at a task management GUI.

The server 90 may comprise a model processing module 94, which may maintain one or more models of the underground worksite, such as the tunnel model, which may be stored in a database 98. The model processing module 94 may be configured to perform at least some features of Figure 3.

The server 90 may comprise a visualizer GUI module 95, which is configured to generate at least some display views for an operator (locally and/or remotely). In some embodiments, the visualizer GUI module 95 is configured to generate, on the basis of the above illustrated x, y, z coordinate values, a 3D (and/or 2D) view indicating the current position of the mobile device.

The server 90 may comprise further module(s) 97, such as a remote monitoring process and UI, a route generation module, and/or a cloud dispatcher component configured to provide selected worksite information, such as the mobile object position information to a cloud service. The route generation module may be configured to generate and/or update route information to include the safety margin parameter defined in block 330 (which may be received from the model processing module or defined by the route generation module itself, for example).

The system and server 90 may be connected to a further system 87 and/or network 99, such a worksite management system, a cloud service, an intermediate communications network, such as the internet, etc. The system may further comprise or be connected to a further device or control unit, such as a handheld user unit, a vehicle unit, a worksite management device/system, a remote control and/or monitoring device/system, data analytics device/system, sensor system/device, etc. In the example of Figure 9 the modules are illustrated as inter-connected, but it is to be appreciated that not all modules need to be connectable.

The system may comprise or be connected to a vehicle control unit or module for which the route may be transmitted. The vehicle control unit may be provided in each autonomously operating vehicle and be configured to control at least some autonomous operations of the vehicle on the basis of the 3D location indicators. For example, in response to detecting a person to enter a zone comprising an autonomously operating vehicle, the control unit may be configured to send a control command to stop the vehicle.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

**Claims**

1. An apparatus, comprising means configured for performing:

   - receiving (310) a tunnel model of an underground tunnel system of a worksite (1),
   - receiving (320) a route point entry indicative of a route point position for a vehicle (20) in the tunnel system,
   - defining (330), for controlling obstacle detection for the vehicle, at least one lateral safety margin parameter on the basis of vehicle dimension data and processing the tunnel model in respect to the route point position, and
- associating (340) the at least one lateral safety margin parameter with the route point position.

2. The apparatus of claim 1, wherein the means are configured for

- performing a set of lateral distance measurements (522, 524) in the tunnel model on the basis of the route point position, each lateral distance measurement being performed at different vertical plane position, and
- defining (330) the at least one lateral safety margin parameter on the basis of shortest distance among the distance measurements.

3. The apparatus of claim 1 or 2, wherein the means are configured for:

- positioning a model (510) of the vehicle in the tunnel model on the basis of the route point position, and
- defining the at least one lateral safety margin parameter on the basis of distances in respect to the model of the vehicle and obstacle points in the tunnel model.

4. The method of claim 3, wherein the means are configured for orienting the model of the vehicle in the tunnel model on the basis of route direction indicated in the route point entry.

5. The apparatus of any preceding claim, wherein the means are configured for:

- defining a set of intermediary points (620) between the route point and at least one neighbouring route point in horizontal plane,
- processing the tunnel model to determine distances to obstacles in the tunnel model in respect to each of the intermediary points at different vertical plane positions, and
- defining the at least one lateral safety margin parameter further on the basis of shortest distances at the intermediary points.

6. The apparatus of any preceding claim, wherein the at least one lateral safety margin parameter is indicative of at least a width of an obstacle detection zone (630) between the vehicle and a tunnel wall to be applied for obstacle detection at least at the route point.

7. The apparatus of claim 6, wherein the width is determined based on:

- difference between a clearance distance and a scanner level distance, wherein the clearance distance indicative of the shortest lateral distance between a side of the vehicle and a tunnel model point and the scanner level distance is indicative of lateral distance between the side of the vehicle and a tunnel model point at vertical position of the scanner, and
- a deviation distance indicative of allowed deviation of the vehicle from the route point.

8. The apparatus of any preceding claim, wherein the tunnel model comprises three-dimensional point cloud data generated on the basis of scanning the tunnel and the apparatus is configured to determine distances to obstacles in the tunnel model by ray cast operations.

9. The apparatus of any preceding claim, wherein the vehicle comprises a first scanner configured to scan tunnel wall profile at a first vertical level in relation to the vehicle, wherein navigation of the vehicle is controlled on the basis of scanning data from the first scanner, an environment model generated based on scanning at the first vertical level, and route point data comprising the route point entry, wherein the tunnel model is generated by a second scanner configured to scan tunnel wall profile at a second vertical level in relation to the vehicle.

10. A computer-implemented method, comprising:

- receiving (310) a tunnel model of an underground tunnel system of a worksite (1),
- receiving (320) a route point entry indicative of a route point position for a vehicle (20) in the tunnel system,
- defining (330), for controlling obstacle detection for the vehicle, at least one lateral safety margin parameter on the basis of vehicle dimension data and processing the tunnel model in respect to the route point position, and
- associating (340) the at least one lateral safety margin parameter with the route point position.

11. The method of claim 10, comprising:

- performing a set of lateral distance measurements in the tunnel model on the basis of the route point position, each lateral distance measurement being performed at different vertical plane position, and
- defining (330) the at least one lateral safety margin parameter on the basis of shortest distance among the distance measurements.

12. A mine vehicle, comprising means configured for performing obstacle detection in an underground tunnel system by using the at least one lateral safety margin parameter defined by the method of any one of claims 10 to 11.

13. The mine vehicle of claim 12, wherein a collision avoidance control function of the mine vehicle is configured to:

   - monitor distances to closest detection points on the basis of scanning environment by at least one scanner (40) of the vehicle during driving,
   - determine if a detection point falls in an obstacle detection zone determined on the basis of the at least one lateral safety margin parameter in response to detecting the vehicle to locate in proximity to the at least one route point, and
   - apply a second safety margin parameter in response detecting the vehicle to locate in proximity to a second route point associated with the second safety margin parameter defined on the basis of processing the tunnel model in respect to the second route point.

14. A system, comprising means configured for performing

   - receiving (310) a tunnel model of an underground tunnel system of a worksite (1),
   - receiving (320) a route point entry indicative of a route point position for a vehicle (20) in the tunnel system,
   - defining (330), for controlling obstacle detection for the vehicle, at least one lateral safety margin parameter on the basis of vehicle dimension data and processing the tunnel model in respect to the route point position, and
   - associating (340) the at least one lateral safety margin parameter with the route point position.

15. A computer program comprising code for, when executed in a data processing apparatus, to cause a method in accordance with claim 10 or 11 to be performed.

Fig. 1

Fig. 2

Receive tunnel model of underground tunnel system of worksite _ 310

Receive route point entry indicative of route point position for vehicle in the tunnel system _ 320

Define, for controlling obstacle detection for the mine vehicle, at least one lateral safety margin parameter on the basis of vehicle dimension data and processing the tunnel model in respect to the route point position _ 330

Associate the at least one lateral safety margin parameter with the route point position _ 340

Fig. 3

430 _ 400

420

410

Fig. 4

Fig. 5

Fig. 6

70

Comms
unit 75

Memory 72

Code 73

Par 74

Processor
71

Sensor(s)
78

Input
device 77

Display 76

Fig. 7

99

87

90

Task
Manager
93

Model
Processing
94

Visuali-
zer GUI
95

97

98

Position
service
91

Object
tracking
92

88

8

Fig. 8

Europäisches
Patentamt

European
Patent Office

Office européen
des brevets

# EUROPEAN SEARCH REPORT

Application Number

EP 19 21 6594

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2011/141629 A1 (SANDVIK MINING & CONSTR OY [FI]; MAEKELAE HANNU [FI] ET AL.) 17 November 2011 (2011-11-17) * paragraphs [0016] - [0021]; figures 1,2 * | 1-15 | INV. E21C41/16 E21F13/00 G05D1/02 |

-----

TECHNICAL FIELDS SEARCHED (IPC)

E21C
G05D
E21F

The present search report has been drawn up for all claims

| Place of search | Date of completion of the search | Examiner |
|---|---|---|
| The Hague | 19 June 2020 | Maukonen, Kalle |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

**ANNEX TO THE EUROPEAN SEARCH REPORT
ON EUROPEAN PATENT APPLICATION NO.**

EP 19 21 6594

This annex lists the patent family members relating to the patent documents cited in the above-mentioned European search report.
The members are as contained in the European Patent Office EDP file on
The European Patent Office is in no way liable for these particulars which are merely given for the purpose of information.

19-06-2020

| Patent document cited in search report | Publication date | Patent family member(s) | | Publication date |
|---|---|---|---|---|
| WO 2011141629 A1 | 17-11-2011 | AU | 2011251868 A1 | 06-12-2012 |
| | | CA | 2796986 A1 | 17-11-2011 |
| | | CL | 2012003115 A1 | 03-05-2013 |
| | | CN | 102893176 A | 23-01-2013 |
| | | EP | 2569652 A1 | 20-03-2013 |
| | | US | 2013060458 A1 | 07-03-2013 |
| | | WO | 2011141629 A1 | 17-11-2011 |
| | | ZA | 201208423 B | 25-09-2013 |

EPO FORM P0459

For more details about this annex : see Official Journal of the European Patent Office, No. 12/82

**EP 3 839 203 A1**

**Patent documents cited in the description**

- WO 2004086084 A